# EUROPÄISCHE PATENTSCHRIFT

(11) **EP 1 518 383 B1**
(45) Veröffentlichungstag und Bekanntmachung des Hinweises auf die Patenterteilung: **25.07.2012**
(21) Anmeldenummer: 03756942.3
(22) Anmeldetag: 20.05.2003
(51) Int. Cl.: H04L 29/08, G07C 5/00, H04W 4/00

(54) **VERFAHREN UND VORRICHTUNG ZUM SENDEN UND/ODER ZUM EMPFANG VON INFORMATIONEN IN VERBINDUNG MIT EINEM FAHRZEUG**
METHOD AND DEVICE FOR EMITTING AND/OR RECEIVING INFORMATION RELATING TO A VEHICLE
PROCEDE ET DISPOSITIF D'EMISSION ET/OU DE RECEPTION D'INFORMATIONS EN RELATION AVEC UN VEHICULE

(30) Priorität: 10.06.2002 DE 10225786
(43) Veröffentlichungstag der Anmeldung: 30.03.2005
(73) Patentinhaber: ROBERT BOSCH GMBH, 70442 Stuttgart (DE)
(72) Erfinder: SONNENREIN, Thomas, 31167 Bockenem (DE); BAUER, Norbert, 97616 Bad Neustadt (DE)
(86) Internationale Anmeldenummer: PCT/DE2003/001625
(87) Internationale Veröffentlichungsnummer: WO 2003/105434

(56) Entgegenhaltungen:
- EP-A- 0 918 423
- EP-A- 1 058 220
- WO-A-01/35373
- WO-A-01/81107
- DE-A- 10 001 130
- DE-A- 10 113 232
- US-A- 5 732 074
- US-A1- 2001 055 165
- US-B1- 6 181 994

## Beschreibung

### Stand der Technik

Die Erfindung betrifft ein Verfahren und Vorrichtung zur Übertragung, zum Senden und/oder zum Empfang von Informationen in Verbindung mit einem Fahrzeug, insbesondere zur Ferndiagnose, Fernsteuerung und/oder Fernbedienung einer Komponente/Funktion des Fahrzeugs.

In der DE 100 26 754 A1 ist ein Verfahren und eine Vorrichtung zur Übertragung, zum Senden und/oder zum Empfang von Informationen in Verbindung mit einem Fahrzeug beschrieben, Es findet ein Datenaustausch über ein Telekommunikationsnetz und/oder ein Datennetz zur Realisierung einer Fernwartung, einer Ferndiagnose und/oder einer Fernsteuerung eines Kraftfahrzeugs, einer seiner Komponenten und/oder Funktionen statt. Als Beispiel für das Telekommunikationsnetz wird dabei ein Mobilfunknetz nach dem GSM-Standard oder nach dem UMTS-Standard vorgeschlagen, während als Beispiel für das Datennetz das Internet erwähnt ist. Hinweise auf die konkrete Ausgestaltung insbesondere im Hinblick auf Flexibilität und/oder Zuverlässigkeit und/oder Sicherheit des Informationsaustausches und/oder im Hinblick auf die Aufwandsreduzierung vor allem bei den Endgeräten im Fahrzeug werden nicht gegeben.

Das Dokument "Ertico, Telematics Forum Brochure, 4/2002 zeigt eine Vorgehensweise zur Kommunikation zwischen einem fahrzeugseitigen Client und einem netzwerkseitigen Server über eine WAP-Schnittstelle. Dabei werden auch im Rahmen einer Diagnose vom Server zum Client Informationen übertragen.

Die US 6330499 zeigt ein System und ein Verfahren zur Fahrzeugdiagnose, welches einen fahrzeugseitigen Client, der mit einem Fahrzeugüberwachungssystem verbunden ist, und eine Fernkommunikation zu einem Server vorsieht.

### Vorteile der Erfindung

Durch die Kommunikation von mobilen Endgeräten mit stationären Rechnern im Internet über standardisierte Kommunikationswege, z.B. über das WAP-Protokoll, können bereits vorhandene Telematikendgeräte im Fahrzeug, die über einen entsprechenden Zugang verfügen, zur Durchführung von fahrzeugbezogenen Telematikanwendungen wie beispielsweise Fernabfrage und/oder Fernsteuerung von Fahrzeugkomponenten und/oder der Durchführung einer Ferndiagnose benutzt werden, ohne dass eine völlige Neukonzeption dieser Endgerät mit dem entsprechenden Aufwand notwendig sind.

Besonders vorteilhaft ist die Verwendung des WAP-Protokolls, da dessen leistungsfähige Übertragungs- und/oder Sicherheitsmechanismen für die specifische Anwendung im mobilen Bereich, insbesondere für die genannten fahrzeugbezogenen Telematikanwendungen wie die Ferndiagnose von Kraftfahrzeugsteuergeräten, genutzt werden können.

Ein weiterer positiver Effekt der Verwendung dieses Protokolls ist, dass Ressourcen wie Speicher- und Rechenleistung bei den Endgeräten eingespart werden, da dieses Protokoll speziell für Endgeräte mit wenig Ressourcen ausgelegt ist. Bei der Verwendung dieses Protokolls werden keine zusätzlichen Funktionseinheiten für die Datenübertragung und die Visualisierung der Inhalte benötigt werden. Dies wird allein durch die Verwendung eines an sich bekannten WAP-Browsers und dem zugehörigen WAP-Kommunikationsstack erreicht. Besonders günstig im Hinblick auf die Einsparung von Ressourcen im Endgerät ist die Nutzung des WAP-Protokolls, wenn dieses im Endgerät ohnehin vorhanden ist für andere Dienste, wie z. B. mobile Internet. Die Synergie, die durch die Nutzung des Protokolls erreicht wird, ist daher beachtlich.

Durch die Realisierung der übertragenen WAP-Inhalte in Form von WML-Seiten können statisch und auch dynamisch generierte Inhalte, z.B. zur Interaktion mit dem Nutzer, dem WAP-Browser im Endgerät vom Server bereitgestellt werden. Dabei können die WML-Seiten auch sogenannte WML-Skripte enthalten, welche die Beschreibung komplexerer Abläufe im Endgerät ermöglichen. Teile der Endgeräte-Applikationen wie z. B. Ferndiagnose müssen dadurch nicht selbst explizit dort umgesetzt werden, sondern sind im WAP-Stack bereits realisiert und universell nutzbar.

Besonders vorteilhaft ist, dass der WAP-Standard eine Schnittstelle bereitstellt (EFI-Interface) mit deren Hilfe der WAP-Browser (und damit indirekt der Server) mit eigenständigen, externen Applikationen auf dem mobilen Endgerät über ein standardisiertes Funktions-Interface kommunizieren können. Somit werden Mechanismen angeboten, die die Kommunikation mit Softwarekomponenten, die nicht im Browser enthalten sind wie z.B. die Diagnoseschnittstelle zu den zu diagnostizierenden Steuergeräte, erleichtern.

Besonders vorteilhaft ist, dass zusätzlich zu den obengenannten fahrzeugbezogenen Telematikanwendungen wie die Ferndiagnose von Kraftfahrzeugsteuergeräten auch weitere Telematikdienste wie Pannenruf, Notruf oder Verkehrsinformation über das standardisierte Protokoll realisierbar sind.

Besonders vorteilhaft ist, dass unter Verwendung des standardisierten Protokolls die Kommunikation zwischen Endgerät und Server im Rahmen fest vorgegebener Teilschritte als Frage-Antwort-Kommunikation aufbauend auf standardisierten Datenrahmen und -inhalte (WML, WML-Script) realisiert wird.

In besonders vorteilhafter Weise ist durch Ausnutzung der bestehenden Sicherheitsmechanismen möglich, nach Aktivierung des Telematikdienstes durch Nutzeridentifikation, Authentifizierung und/oder Fahrzeugidentifikation eine besonders sichere und zuverlässige Realisierung des Informationsaustausches bereitzustellen.

Die Verwendung eines an mobile Anwendungen angepassten Protokollstandards (z.B. WAP) zeigt besonders vorteilhafte Ergebnisse in Verbindung mit Telematikdiensten bei Kraftfahrzeugen über Mobilfunknetze.

Weitere Vorteile ergeben sich aus der nachfolgenden Beschreibung sowie aus den abhängigen Patentansprüchen.

### Zeichnung

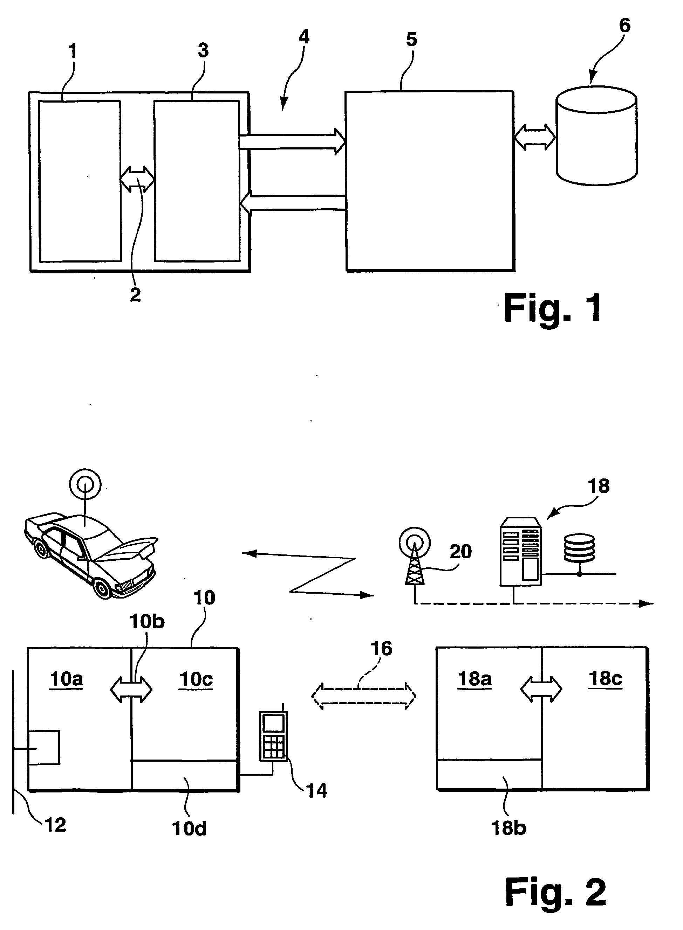

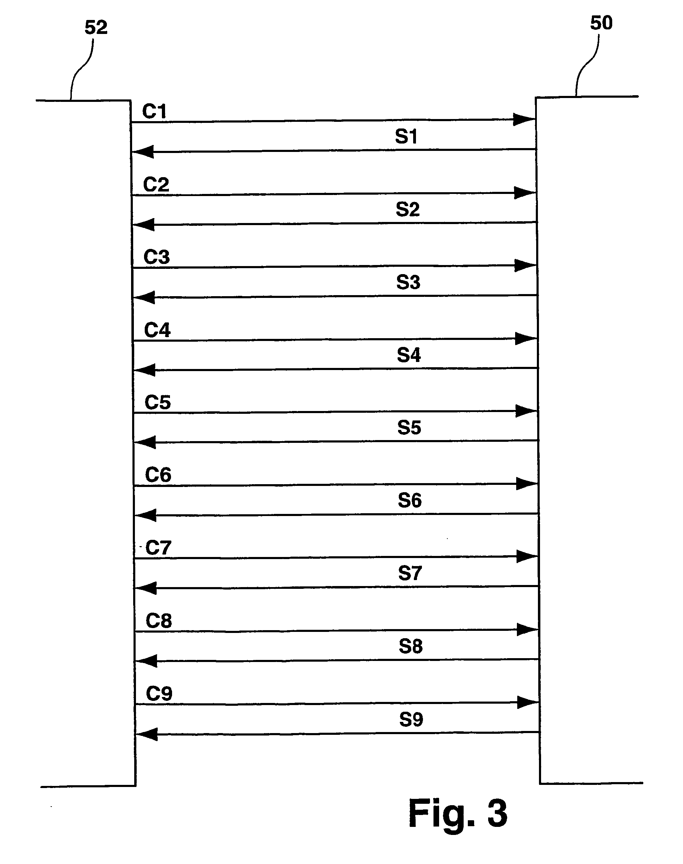

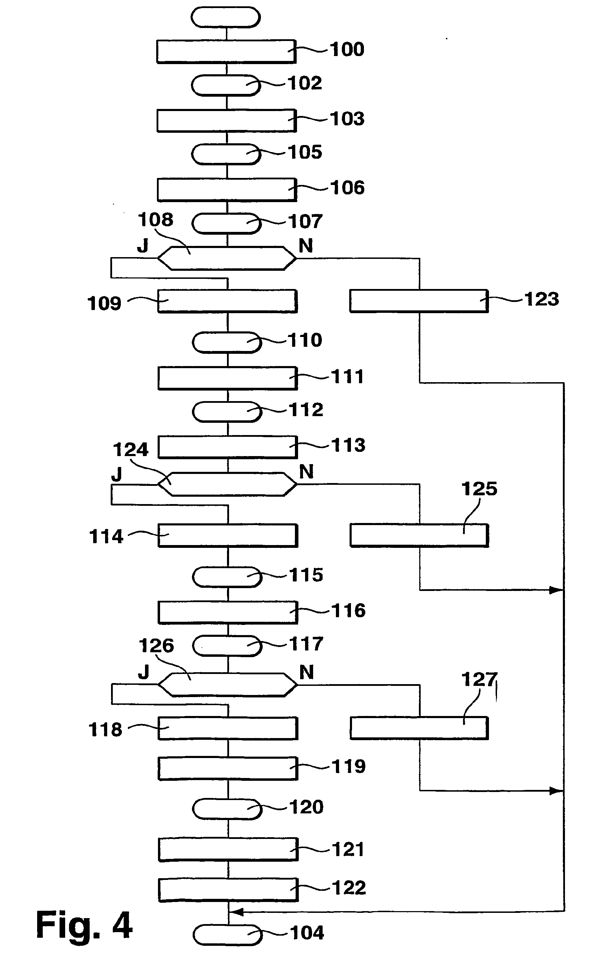

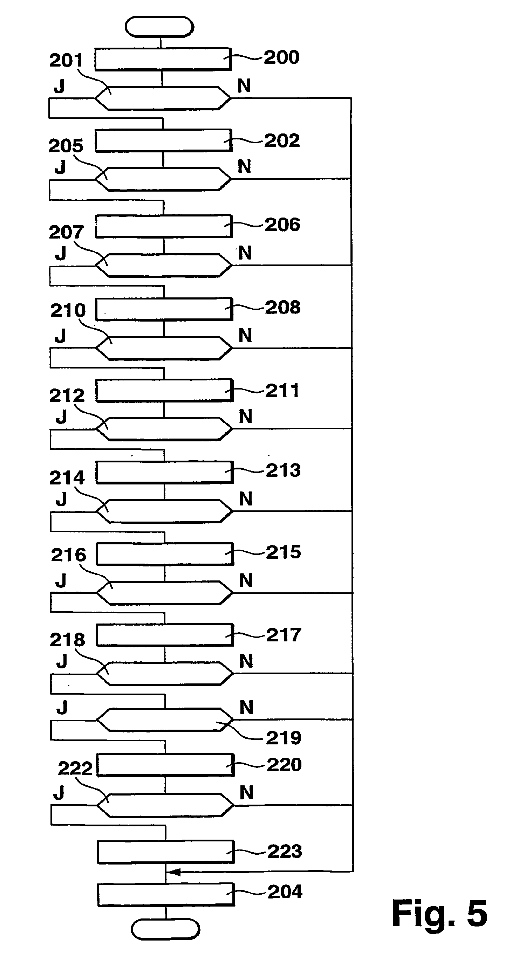

Die Erfindung wird nachstehend anhand der in der Zeichnung dargestellten Ausführungsformen näher erläutert. Figur 1 zeigt dabei ein Übersichtsbild eines Systems für einen fahrzeugbezogenen Telematikdienst, während anhand Figur 2 ein Realisierungsbeispiel eines solchen Systems auf der Basis des WAP-Protokolls gezeigt ist. Figur 3 zeigt ein geeignetes Ausführungsbeispiel von Übertragungsschritten über die Schnittstelle zwischen Telematikendgerät und Server. Die Figuren 4 und 5 zeigen Flussdiagramme, welche die Programmabläufe im Telematikendgerät bzw. im Server am Beispiel der in Figur 3 dargestellten Kommunikation skizzieren.

### Beschreibung von Ausführungsbeispielen

Figur 1 zeigt ein Übersichtsbild eines Systems für einen fahrzeugbezogenen Telematikdienst, wobei Informationen zwischen einem Fahrzeug (dort Endgerät) und einem Server über ein Mobilfunknetz bzw. über ein Datennetz, wie beispielsweise das Internet, ausgetauscht werden. Eine derartige Konfiguration wird in Verbindung mit Funktionen zur Fernwirkung, Ferndiagnose, Fernwartung, Software Download, etc. eingesetzt. Unter Fernwirkung bzw. Femabfrage wird dabei im wesentlichen die Fernsteuerung von Fahrzeugfunktionen, insbesondere Komfortfunktionen wie das Einschalten der Standheizung, etc., sowie das Abfragen von Fahrzeugstati und/oder Betriebsparametern verstanden. Dabei initiiert der Nutzer eine Kommunikation mit dem Fahrzeug über einen zentralen Server oder er kommuniziert direkt mit dem Fahrzeug. Ferndiagnose umfasst das Fernauslesen von Diagnosedaten aus dem Fahrzeug, deren Analyse und ggf. das Erzeugen einer Empfehlung für das weitergehende Handeln. Analyse der Daten und Generierung der Empfehlung erfolgt dabei durch einen zentralen Server, der mit dem Fahrzeug über ein Mobilfunknetz, über ein drahtgebundenes Netz und/oder über ein Datennetz wie beispielsweise das Internet mit dem Kraftfahrzeug in Verbindung steht. Ferner ist in diesem Zusammenhang als Funktion der sogenannte Software-Download bzw. das Remote-Flashing zu nennen, mit deren Hilfe ein neuer Programmcode oder Parameter auf per Software konfigurierbare Systeme im Fahrzeug, beispielsweise Steuergeräte, aufgebracht werden, um die Funktionalitäten oder die Leistungsfähigkeit zu erhöhen. Auch hier erfolgt die Kommunikation über ein Mobilfunknetz, ein drahtgebundenes Netz und/oder beispielsweise das Internet ausgehend von einem zentralen Rechner (Server) bzw. Service-Center.

Fernwartung stellt im wesentlichen die Überwachung des Fahrzeugzustandes und den Zugriff auf die Wartungsdaten im Fahrzeug von einer zentralen Stelle aus dar, um zu überprüfen, ob, wann und welche Maßnahmen zur Wahrung des Sollzustandes durchgeführt werden. Ein Beispiel hierfür ist das dynamische Anpassen von Wartungsintervallen. Allgemein werden diese Funktionalitäten hier unter dem Begriff der fahrzeugbezogenen Fernkontrolle subsumiert.

Alle genannten Funktionen bzw. Dienste werden über die nachfolgend beschriebene Schnittstelle zwischen dem Kraftfahrzeug (dort dem Endgerät) und einem zentralen Rechner, insbesondere einem Server in einem Service-Center oder beim Fahrzeughersteller oder beim Komponentenzulieferer, realisiert. Sofern notwendig erfolgt die Steuerung von Komponenten und/oder Funktionen im Fahrzeug über eine nachfolgend ebenfalls beschriebene Schnittstelle zwischen Endgerät und der betroffenen Fahrzeugkomponente. Im Folgenden wird die Ausführung anhand des Dienstes "Ferndiagnose" dargestellt, in entsprechender Weise erfolgt die Anwendung der Schnittstelle auch in Verbindung vielen anderen Diensten, wie z. B. den oben genannten.

Figur 1 zeigt eine Übersichtsdarstellung eines Ferndiagnosesystems. Fahrzeugseitig ist die Fahrzeugelektronik 1 beispielsweise ein Steuergeräteverbund dargestellt, welcher über eine vorbestimmte Schnittstelle 2 mit dem fahrzeugseitigen Teil 3 des Ferndiagnosesystems, insbesondere mit einem Telematikendgerät verbunden ist. Diese fahrzeugseitige Applikation nutzt die in der Fahrzeugelektronik integrierten Diagnosemechanismen (Onboard-Diagnose) beispielsweise zur Erfassung von Fehlerspeicherinhalten. Der fahrzeugseitige Teil des Ferndiagnosesystems 3 greift über die Schnittstelle 2 beispielsweise über einen CAN-Bus oder eine K-Leitung im Rahmen eines vorgegebenen Kommunikationsprotokoll auf das Fahrzeugnetzwerk und somit auf die Fahrzeugelektronik 1 bzw. die zu diagnostizierende Steuergeräte zu.

Der beschriebene fahrzeugseitige Teil ist über eine weitere Schnittstelle 4 mit dem zentralen Teil 5 des Ferndiagnosesystems verbunden. Dieser zentrale Teil stellt vorzugsweise den Server bzw. das Rechnersystem eines Service-Centers dar. Im bevorzugten Ausführungsbeispiel arbeitet dieser Server möglichst viele der bei der Ferndiagnose anfallenden Aufgaben ab, so dass im Fahrzeugendgerät möglichst wenig Ressourcen vorgehalten werden müssen. Beispielsweise übernimmt er im wesentlichen die Konfiguration der Diagnoseeinheit im Fahrzeug zu Beginn der Diagnose, die Steuerung dieser Einheit während des Vorgangs und die Auswertung der ermittelten Daten. Dazu greift er insbesondere auf fahrzeugindividuelle Daten und Befehle zurück, die im Datenspeicher 6 gespeichert sind. Im bevorzugten Ausführungsbeispiel ist der Server ein Internet-Server.

Die Übertragungsstrecke 4 zwischen Server und Client (Fahrzeugendgerät) ist im bevorzugten Ausführungsbeispiel wegen den Eigenschaften bezüglich Abdeckung, Verfügbarkeit und Kosten eine Mobilfunkschnittstelle. Das in Verbindung mit der Ferndiagnose zum Informationsaustausch eingesetzte Protokoll ist ein standardisiertes Protokoll, welches an die speziellen Anforderung eines Mobilfunknetzes angepasst ist. Im Zusammenhang mit der oben beschriebenen Anwendung hat sich das wireless application protocol (WAP) als geeignet erwiesen. Das WAP ist eine weltweit standardisierte Kommunikation von mobilen Endgeräten mit stationären Rechnern im Internet. Es besteht aus verschiedenen Einzelprotokollen, die den vollständigen Kommunikationsvorgang beschreiben. Dabei verfügt jedes WAP-fähige Endgerät über einen speziellen WAP-Browser zur Interpretation und Visualisierung der standardisierten Übertragungsinhalte. Die übertragenen Inhalte werden in Form von WML-Seiten realisiert. Diese Seiten können auch sogenannte WML-Skripte enthalten, die die Beschreibung komplexerer Abläufe im Endgerät ermöglichen. Ferner gibt es ein standardisiertes Funktionsinterface (EFI-Interface), welches Bestandteil des WAP-Browsers ist und zur Kommunikation mit Softwarekomponenten, die nicht im Browser enthalten sind, also insbesondere Fahrzeugfunktionen, Diagnosefunktionen, etc, dient.

Neben den geschilderten Kernfähigkeiten des WAP-Protokolls werden in der spezifischen Anwendung zur Ferndiagnose von Kraftfahrzeugen bzw. Kraftfahrzeugkomponenten die Sicherheitsmechanismen des Protokolls eingesetzt. Damit sind keine zusätzlichen Funktionseinheiten im Endgerät zur Gewährleistung der Sicherheit des Datentransfers und/oder zur Bereitstellung von Zugriffsrechten notwendig.

Figur 2 zeigt ein Schaubild, welches eine Realisierung eines Ferndiagnosesystems mit WAP-Kommunikation darstellt. Der fahrzeugseitige Teil 10 (Endgerät) besteht im Wesentlichen aus einem Modul 10a, welches die Funktionalitäten der Diagnoseanwendung umfasst, aus einem Modul 10c, dem WAP-Browser und einem Kommunikationsmodul 10d, welches Information ins Mobilfunknetz sendet und von dort empfängt. Das Modul 10a ist über ein Bussystem 12 (Diagnosebus), beispielsweise ein CAN-Bus, mit anderen Steuereinheiten und/oder Komponenten des Fahrzeugs verbunden. Über diese Schnittstellen werden Informationen, Daten und/oder Befehle ausgetauscht. Über eine weitere Schnittstelle 10b (EFI-Schnittstelle) ist das Modul 10a mit dem Web-Browser 10c verknüpft. Das Kommunikationsmodul 10d sendet bzw. empfängt über einen Sender bzw. Empfänger 14, z.B. ein Mobilfunkgerät, Daten zur bzw. über die Luftschnittstelle 16. Ferner ist (in Figur 2 nicht dargestellt) ein Betriebssystem zur Organistaion der Abläufe sowie im Modul 10c der sogenannte WAP-Stack vorgesehen, der die Funktionalitäten zur Realisierung des WAP-Protokolls enthält.

Der fahrzeugseitige Teil des Systems ist in einem Ausführungsbeispiel in einem Telematikendgerät integriert. In diesem ist auch das geschilderte GSM-Modul für den Mobilfunkverkehr und der WAP-Stack für die Internetfunktionalität enthalten. Die Anbindung an den Diagnose-Bus, meistens über CAN, ist ebenfalls vorhanden. Anstelle des GSM-Standards oder ergänzend hierzu sind für die Kommunikation über WAP auch Mobilfunkstandards wie GPRS oder UMTS gut geeignet, da diese einen schnellen Verbindungsaufbau, geringe Verzögerungszeiten und eine hohe Datenübertragungsrate zu geringen Kosten vorweisen.

Die Kommunikation zwischen Fahrzeugendgerät und zentraler Rechnereinheit erfolgt über ein Mobilfunknetz 16. Die zentrale Recheneinheit 18, insbesondere ein Web-Server, empfängt von einer Sende-/Empfangseinrichtung 20 der Mobilfunkschnittstelle direkt oder über einen Gateway-Rechner Daten vom fahrzeugseitigen Teil des Systems oder sendet Daten an diesen. Wird ein Gateway-Rechner auf der Netzwerkseite eingesetzt, bildet dieser das WAP-Gateway (hier wird der WAP-stack implementiert). Üblicherweise findet in einem solchen Gateway die Einwahl des Mobilfunkgerätes 14 in das Internet statt. Neben dem WAP-Modul umfasst der Gateway-recher insbesondere auch die Kommunikationsschnittstelle zum Mobilfunknetz sowie die Schnittstelle zum Web-Server. Das WAP-Gateway hat einerseits die Aufgabe, eine Protokollumsetzung von WAP- auf das Internet-Format HTTP und umgekehrt vorzunehmen, andererseits eine Kompression und Vorkompilierung der vom angefragten Web-Server erhaltenen WML-Seiten und - Skripte durchzuführen, bevor diese an den Mobilfunkteilnehmer zurückgeschickt werden. Diese Gateway-Funktion übernimmt wie in Figur 2 dargestellt der Server 18 selbst (Modul 18a, Mobilfunknetzschnittstellenmodul 18b), während in anderen Ausführung ein mit dem Server über eine Internetverbindung verbundener Gatewayrechner die geschilderten Aufgaben übernimmt.

Der Web-Server 18 beispielsweise eines Service-Center hat die Aufgabe des Diagnose-Servers. Die im Web-Server 18 implementierte Software (Modul 18c) beantwortet die Anfragen des Clients (Endgerät) mit dynamisch generierten Antwortseiten und -Skripten. Die dynamische Generierung der Antworten erfolgt mit Hilfe von vorgegeben, serverseitigen Skripten (Programme) und einer Datenbank 22, die alle notwendigen Daten zur Identifikation, Konfiguration und Ausführung der Diagnoseapplikation im Fahrzeug für den entsprechenden Anfragenden beinhaltet. Aufgaben des Web-Servers sind zum einen allgemeine Web-Server-Aufgaben, z.B. Bearbeitung von Anfragen, Verteilung der Seiten oder Dateien an den richtigen Empfänger, das Kommunikations-Management, etc., ferner die übergeordnete Ablaufsteuerung der Diagnose und Konfiguration der Diagnoseapplikation im Client über dynamisch generierte WML-Seiten und -Skripte, das Vorhalten und Verwalten der für die Fahrzeugdiagnose notwendigen Daten in einer Datenbank, das Verwalten der Datenbank selbst, die Auswertung der vom Fahrzeug kommenden Nutzdaten, das Vorhalten bzw. die dynamische Generierung der Oberfläche für die Femdiagnoseapplikation im Fahrzeug. Das Ermitteln der Nutzdaten (Fehlerspeicher), das heißt die Diagnose selbst, wird dabei nach bekannten Diagnosemethoden, die im Fahrzeug implementiert sind, durchgeführt.

Während des Diagnosevorgangs werden WML-Seiten und WML-Skripte zur Steuerung der Diagnoseabläufe vom Server zum Endgerät übertragen und von diesem verarbeitet. Dabei werden u. a. Daten daraus auf den CAN-Bus umgesetzt. Auf ein eigenimplementiertes Mensch-Maschinen-Interface im fahrzeugseitigen Teil des Systems wird dabei verzichtet, da dieses durch die Anzeige der WML-Seiten im WAP-Browser realisiert ist.

Ein Beispiel für die Kommunikation zwischen Server 50 und fahrzeugseitigem Teil 52 ist anhand Figur 3 dargestellt. Im dargestellten Fall beginnt die Initiierung des Kommunikationsvorgangs durch eine Bedienperson, z.B. den Fahrer des Kraftfahrzeugs. In anderen Ausführungen wird die Aktivierung der Femdiagnosekommunikation durch das Service-Center vorgenommen. In einer Ausführung erfolgt die Initiierung über den Server, in dem dieser vorab zur Darstellung der Figur 3 als zusätzlichen Schritt den Client zum Aufbau einer Kommunikationsverbindung auffordert, z. B. über eine SMS an den Client. Ein solcher Vorgang ist im WAP-Standard als sog. Push spezifiziert /standardisiert.

Die für die Ferndiagnose relevanten Inhalte bzw. Daten, die neben den eigentlichen Diagnosedaten auch Kommandos zur Steuerung und Konfiguration der im Fahrzeug integrierten Ferndiagnosefunktionalität beinhalten, sind je nach Ausführung unterschiedlich strukturiert. In einer ersten Ausführung enthält die Ferndiagnoseeinheit im Fahrzeug Mechanismen und Funktionen für die eigenständige Durchführung der Diagnosevorgänge. Das Auslesen von Steuergerätefehlerspeichern zur Datenerfassung erfolgt durch ferngesteuerte Funktionen im Telematikendgerät. In diesem sind funktionale Einheiten wie die Transportprotokollschicht für CAN-Bus-Daten, die für den logischen Diagnosevorgang notwendige Protokollschicht und eine entsprechende Ablaufsteuerung enthalten. Dabei ist auch vorgesehen, die erforderlichen Daten für die entsprechenden Protokollschichten und für die Ablaufsteuerung zu Beginn des Diagnosevorgangs vom Diagnose-Server herunterzuladen und mit Hilfe von Protokollmakros und Kommunikationsparametern die Schichten zu konfigurieren. Dies hat zur Folge, dass neben den eigentlichen Steuerkommandos zur Fernsteuerung der Ferndiagnosefunktionen gegebenenfalls auch Parameter und Diagnosemakros übertragen werden müssen. Die für die Parametrisierung notwenigen Daten werden prinzipiell auch dauerhaft im Telematikendgerät vorgehalten, was deren Übertragung vom Server zum Client überflüssig macht. In einer zweiten Ausführung ist die Übertragung von kommando auf der Ebene des Diagnoseprotokolls vorgesehen. In diesem Fall führt die Einheit im Fahrzeug den Diagnosevorgang nicht eigenständig durch, sondern reicht nur die vom Server kommenden Daten an das zu diagnostizierende Steuergerät durch. Dadurch werden Diagnoseprotokollfunktionalitäten im Fahrzeug sehr stark und bis auf ein Minimum reduziert. Sie verbleiben nahezu vollständig im Server. In diesem Fall werden die einzelnen Diagnosekommandos transparent über die Luftschnittstelle übertragen. Lediglich einige wenige einfach strukturierte Nachrichten werden im Fahrzeug generiert. Dies bedeutet für die während des Diagnosevorgangs übertragenen Dateninhalte, dass neben den eigentlichen Diagnosedaten (Fehlerspeicherinhalte) zusätzlich Diagnosekommandos übertragen werden, die z.B. nach dem KWP 2000-Diagnoseprotokollstandard spezifiziert sind. In einer dritten Ausführung werden Mischformen der beiden geschilderten, extremen Varianten der Partitionierung von Diagnosefunktionen zwischen Telematikendgerät und Service-Center eingesetzt. Beispielsweise erfolgt eine parallele Übertragung von Kommandos zur Fernsteuerung der Gesamtfunktionen und einzelne Kommandos des Diagnoseprotokolls, die nicht fest im Endgerät integriert sind.

Die Darstellung in Figur 3 zeigt auf der linken Seite den fahrzeugseitigen Teil 52 des Diagnosesystems, auf der rechten Seite den netzwerkseitigen Teil 50. Die Pfeile stellen den Informationsfluss dar, wobei von oben nach unten eine zeitliche Reihenfolge der Anfragen und Antworten im Rahmen der Kommunikation dargestellt ist. Die dargestellten Kommunikationsschritte sind dabei beispielhaft. Ihre Anzahl kann beispielsweise durch Zusammenfassung einzelner Teilabläufe in einem Kommunikationsvorgang auch reduziert werden.

Zunächst erfolgt im Schritt C1 die Anfrage einer Ferndiagnosestartseite an das Service-Center durch den Client. Im bevorzugten Ausführungsbeispiel wird diese Nachricht als URL-Adresse gesendet, die im Endgerät gespeichert ist. Ausgelöst wird die Anfrage durch eine entsprechende Aktivierung der Ferndiagnose durch eine Bedienperson, beispielsweise mittels eines im Fahrzeug angebrachten Schalters, einer Eingabe, einer Befehlskombination, oder aufgrund einer über Mobilfunk (von einer Bedienperson, vom Service-Center, etc.) übermittelten Aufforderung. Die Antwort des Servers ist im Schritt S 1 dargestellt. Im bevorzugten Ausführungsbeispiel sendet der Server dem Endgerät eine WAP-Seite zur Aktivierung der Ferndiagnose im Fahrzeug dar. Die Seite wird dabei als WML-Seite realisiert. Die beiden genannten Schritte stellen den Teilvorgang "Anfrage des Ferndiagnosedienstes" dar.

Im nächsten Schritt C2 nach Empfang der WAP-Seite fordert der Client entweder automatisch oder Nutzer-initiiert die Übermittlung einer Login-Seite an. Deren URL befand sich in der zuvor erhaltenen Seite. Der Server stellt daraufhin im Schritt S2 die gewünschte Login-Seite bereit, mit einem Verweis auf ein Login-Skript. Die Seite wird auch hier als WML-Seite mit einem entsprechenden Skriptverweis gesendet. Im Client wird gegebenenfalls eine Information über die geladene Login-Seite auf einem Display für den Nutzer ausgegeben. Im nächsten Schritt C3 erfolgt eine automatische Anfrage eines Login-Skripts durch den Client zur Authentifizierung und/oder Nutzeridentifikation beim Server (Dienstleister). Die URL dazuwird mittels des Skiptverweises in der WML-Seite ermittelt. Im darauffolgenden Schritt S3 übermittelt der Server das angeforderte Login-Skript als WML-Skript zum Auslesen der Nutzerdaten im Fahrzeug. Dieses wird vom Client automatisch oder durch Eingabe der Bedienperson ausgeführt. Daraufhin sendet der Client im Schritt C4 mit der Anfrage für die nächste WAP-Seite die Daten (Nutzeridentifikationsdaten) an den Server. Im Server werden dann die übermittelten Nutzerdaten überprüft und bei Korrektheit dieser Daten der Ferndiagnose-Vorgang fortgeführt, im anderen Fall abgebrochen oder Schritt S3 wiederholt. Die Schritte S2 bis C4 stellen dabei den Teilabschnitt Nutzeridentifikation und Authentifizierung dar.

Sind die Nutzerdaten also in Ordnung, so beginnt der Server mit der Ferndiagnose, indem er im Schritt S4 eine WAP-Seite (als WML-Seite mit Skriptverweis) ,die nach erfolgreicher Identifikation des Users u. a. eine Login-Bestätigung übermittelt. Diese WAP-Seite enthält dabei einen Verweis auf das WML-Skript für die Identifikation des Kraftfahrzeugs. Im Client wird die Übermittlung der Loginbestätigung gegebenenfalls als Nutzerinformation auf einem Display ausgegeben. Im nächsten Schritt C5 sendet der Client eine Anfrage eines Skripts zum Auslesen der Kraftfahrzeugidentifikationsdaten an den Server. Die dazu benötigte URL-Adresse ist im Skriptverweis des Schrittes S4 enthalten. Der Server nimmt diese Anfrage auf und übermittelt im Rahmen des Schrittes S5 als WML-Skript ein Skript zum Auslesen der Kraftfahrzeugidentifikationsdaten an den Client. Daraufhin werden im Client die entsprechenden Identifikationsdaten ausgelesen und zusammen mit der Anfrage der nächsten WAP-Seite mit Daten im Schritt C6 an den Server geschickt. Die übermittelten KFZ-Identifikationsdaten (Fahrzeugtyp, ggf. Softwarestand, etc.), gegebenenfalls mit GPS-Positionsdaten, werden im Server überprüft. Abhängig von den Daten werden die Diagnoseabläufe und die notwendigen Parameter aus seiner Datenbank ausgewählt. Damit ist der Teilschritt der Fahrzeugidentifikation (S4 bis C6) abgeschlossen und die nächste WML-Seite wird beim Server angefragt. Die URL dazu wurde im soeben ausgeführten Teilschritt an den Client mitübermittelt.

Der Server sendet daraufhin im Schritt S6 eine Diagnose-Folgeseite u. a. mit Statusinformation samt Verweis auf ein Diagnose-Skript an den Client. Diese erfolgt als WML-Seite mit Skript-Verweis. Im Client wird gegebenenfalls der Diagnosestart dem Nutzer auf einem Display dargestellt. Nach Empfang der Informationen in Schritt S6 sendet der Client die Anfrage zum Server, mit der er die Übertragung des Diagnoseskripts zum Auslesen der Diagnosedaten anfordert. Die URL-Adresse wird aus dem Skriptverweis im Schritt S6 entnommen. Im Server wird dann auf der Basis dieser Anfrage das Diagnose-Skript (WML-Skript) generiert und im Schritt S7 zum Client übertragen. Daraufhin werden unter Ausführung des Diagnose-Skripts die Fehlerspeicher auf der Fahrzeugseite ausgelesen und mit der Anfrage der nächsten WML-Seite im Schritt C8 zum Server übertragen. Die Schritte S6 bis C8 stellen dabei den Teilbereich des Auslesens der Diagnosedaten dar, welches grundsätzlich auch in mehreren Durchläufen, das heißt mit mehreren Teilskripten erfolgen kann. Beispielsweise kann je Steuergerät ein Skript vorgesehen sein. Der Teilvorgang in diesem Bereich wird dann mehrfach durchgeführt.

Mit Hilfe einer im vorhergehenden Schritt erhaltenenURL-Adresse wird eine WAP-Folgeseite, die das Diagnoseergebnis enthält, angefragt. Im Server werden die Diagnosedaten (Fehlercodes) mit Hilfe der Datenbank ausgewertet, ggf. bewertet und dynamisch eine Diagnose-Ergebnisseite generiert. Die Ergebnisseite wird dann im Schritt S8 als WML-Seite an den Client übermittelt. Aufgrund der Übermittlung der Ergebnisseite erfolgt im Client die Ausgabe des Diagnose-Ergebnisses auf einem Display. Schritt S8 stellt somit den Teilbereich des Ermittelns des Diagnose-Ergebnisses und seine Ausgabe dar.

Im darauf folgenden Schritt C9 sendet der Client ggf. manuell initiiert eine weitere Anfrage an den Server, mit der er eine WAP-Seite mit Folgeempfehlung anfordert. Die URL dazu kann entweder im Endgerät gespeichert vorliegen oder zusammen mit der Diagnose-Ergebnisseite ubermittelt worden sein. Im Server, der diese Anfrage empfängt, wird aus der Datenbank abhängig vom erkannten Fehler oder den erkannten Fehlern eine Folgeempfehlung generiert, eine Empfehlungsseite aufgebaut und der Diagnosevorgang beendet. Im Schritt S9 sendet der Server die Empfehlungsseite als WML-Seite an den Client. Die ermittelte Folgeempfehlung wird vom Client auf einem Display ausgegeben.

Ergänzend sei erwähnt, dass in den WML-Skripten oder Seiten (je nach Implementierung) zum Abschluss der Befehl für den Browser vorhanden ist, die nächste WML-Seite aufzusuchen und die damit verbundenen Daten zu laden sowie ggf. im Client ermittelte Daten mit der Anfrage an den Server zu übertragen.

Im vorgestellten Übertragungsszenario wird auf Client-Seite bei der Ausführung der genannten WML-Skripte desöfteren auf die im WAP-Standard spezifizierte EFI-Schnittstelle zugegriffen. Das oben beschriebene Szenario ist eine mögliche Ausführung, die je nach Einzelfall stark variieren kann. Die Vorgehensweise zur Ferndiagnose sieht jedoch immer die folgende Teilschritte vor, die oben als Teilvorgang beschrieben sind:
1. Anfrage des Ferndiagnosedienstes
2. Nutzeridentifikation und -authentifizierung
3. Kraftfahrzeugidentifikation
4. Diagnosedaten auslesen
5. Diagnoseergebnisse ermitteln
6. Folgeempfehlung ermitteln

Dabei können diese Teilschritte in der Reihenfolge teilweise getauscht werden, wobei der Teilschritt 6 gegebenenfalls auch entfallen kann.

Die Zahl bzw. die Länge der einzelnen Kommunikationsschritte hängt von der Anzahl der zu diagnostizierenden Einheiten im Fahrzeug ab. Der dargestellte Ablauf erfolgt zum Zeitpunkt der Aktivierung der Ferndiagnose bis zur Ausgabe des Diagnoseergebnisses vollkommen automatisch ohne weitere Interaktion mit dem Nutzer.

Im Client werden die Skripte durch Übermittlung vorgegebener Befehle über die CAN-Verbindung an das zu diagnostizierende Steuergerät ausgeführt. Die von diesem ermittelten Daten werden über die CAN-Verbindung zum Client übertragen und von diesem über die Luftschnittstelle an den Server gesendet.

Die oben beschriebene Vorgehensweise wird durch entsprechende Programme im Server und im Mikrocomputer des Endgerät realisiert, die selbständiger Bestandteil der beschriebenen Erfindung sind. Beispiele für solche Programme sind in den Figuren 4 (für den Server) und 5 (für das Endgerät) skizziert.

Das Programm gemäß Figur 4 wird durch eine Anfrage zur Einleitung der Ferndiagnose gestartet. Im Schritt 100 sendet der Server eine vorbestimmte WAP-Seite zur Aktivierung. Der Server reagiert stets nur auf hereinkommende Anfragen. D. h. der Server ist in einer Art "inaktivem Status" solange keine Anfrage eintrifft.. Die Kommunikation ist für den Server beendet, sobald keine Anfrage vom Client mehr kommt. In Schritt 102 wird der Empfang einer Anfrage (URL-Adresse) für eine Login-Seite erwartet. Wird eine Anfrage empfangen, folgt Schritt 103. Wird keine Anfrage empfangen, ist die Kommunikation aus Sicht des Servers erfolglos beendet. Im Schritt 103 antwortet der Server nach Maßgabe der Anfrage mit der Login-Seite samt Skriptverweis. Daraufhin wird in Schritt 105 der Empfang einer Anfrage (URL-Adresse) für ein Login-Skript erwartetWird eine Anfrage empfangen, folgt Schritt 106. Wird keine Anfrage empfangen, ist die Kommunikation aus Sicht des Servers erfolglos beendet. Im Schritt 106 sendet der Server nach Maßgabe der Anfrage ein Login-Skript. Daraufhin wird in Schritt 107 der Empfang einer Anfrage (URL-Adresse) für eine nächste Seite sowie der Empfang von Nutzeridentifikations- und Authentifizierungsdaten erwartet. Wird eine Anfrage und Daten korrekt empfangen, folgt Schritt 108. Wird keine Anfrage und/Daten und/oder empfangen, wird ist die Kommunikation erfolglos beendet. In Schritt 108 werden die Nutzeridentifikations- und Authentifizierungsdaten überprüft. Stimmen sie mit vorgespeicherten Daten überein, d.h. ist der Sender berechtigt, folgt Schritt 109. Andernfalls wird eine WML-Seite zur Fehlermeldung generiert und an den Client als Antwort auf seine fehlerhafte Anfrage geschickt (Schritt 123). Die Kommunikation ist damit beendet (Schritt 104). Im Schritt 109 sendet der Server nach Maßgabe der Anfrage eine anhand der vorher erhaltenen Daten dynamisch generierte Folgeseite mit Bestätigung des Login samt Skriptverweis auf eine Fahrzeugidentifikationsskript. Daraufhin wird in Schritt 110 der Empfang einer Anfrage (URL-Adresse) für das Fahrzeugidentifikationsskript erwartet. Wird eine Anfrage empfangen, folgt Schritt 111. Wird keine Anfrage empfangen, ist die Kommunikation erfolglos beendet. Im Schritt 111 sendet der Server nach Maßgabe der Anfrage das Fahrzeugidentifikationsskript. Daraufhin wird in Schritt 112 der Empfang einer Anfrage (URL-Adresse) für eine Folgeseite samt Daten für die Fahrzeugidentifikation erwartet. Wird eine Anfrage samt Daten empfangen, folgt Schritt 113. Wird keine Anfrage oder keine Daten empfangen, ist die Kommunikation beendet. Im Schritt 113 erzeugt der Server nach Maßgabe der übermittelten Fahrzeugdaten ein Diagnoseskript für das entsprechende Fahrzeug aus seiner Datenbank. Kann für die übermittelten Daten kein Skript erzeugt werden, wird entweder ein Standardskript verwendet oder der Vorgang beendet (Schritt 124). Dann wird eine Fehlermeldung in Form einer WML-Seite oder ein Verweis auf eine solche zurückgeschickt (Schritt 125). Im folgenden Schritt 114 sendet der Server nach Maßgabe der Anfrage eine Folgeseite samt Verweis auf das Diagnoseskript (URL-Adresse). Daraufhin wird in Schritt 115 der Empfang einer Anfrage (URL-Adresse) für das Skript erwartet. Wird eine Anfrage empfangen, folgt Schritt 116. Wird keine Anfrage oder keine Daten empfangen, ist die Kommunikation erfolglos abgeschlossen. Im Schritt 116 sendet der Server nach Maßgabe der Anfrage das Diagnoseskript. Daraufhin wird in Schritt 117 der Empfang einer Anfrage (URL-Adresse) für eine Folgeseite samt Diagnosedaten erwartet. Wird eine Anfrage samt Daten empfangen (siehe Schritt 126), folgt Schritt 118. Werden keine Daten empfangen, wird die Kommunikation abgebrochen / beendet. Dann wird eine Fehlermeldung in Form einer WML-Seite oder ein Verweis auf eine solche zurückgeschickt (Schritt 127). Im Schritt 118 ermittelt der Server nach Maßgabe der übermittelten Diagnosedaten das Diagnoseergebnis mit Hilfe seiner Datenbank. Im folgenden Schritt 119 sendet der Server nach Maßgabe der Anfrage die Diagnoseergebnisseite. Daraufhin wird in Schritt 120 der Empfang einer Anfrage (URL-Adresse) für eine Empfehlungsseite erwartet. Wird eine Anfrage empfangen, folgt Schritt 121. Wird keine Anfrage empfangen, ist diese Kommunikation erfolglos abgeschlossen (Schritt 104). Im Schritt 121 ermittelt der Server nach Maßgabe der übermittelten Diagnosedaten Empfehlungen für das weitere Vorgehen mit Hilfe seiner Datenbank. Im folgenden Schritt 122 sendet der Server nach Maßgabe der Anfrage die Empfehlungsseite an den Client (und beendet in Schritt 104 die Kommunikation und damit den Ferndiagnosevorgang ).

Um auf Serverseite einen Zusammenhang zwischen den eigentlich unabhängigen und anonymen Anfragen des Clients herstellen zu können, wird diesem zu Beginn der Kommunikation (nach dem Login) eine einmalige Session-ID vergeben mit der er sich ab dann bei jeder Anfrage identifiziert. Dadurch kann der Server erkennen zu wem welche Anfrage gehört. Diese Art des Sessionmanagement ist im Internetbereich bekannt und weit verbreitet.

Das Programm gemäß Figur 5 wird durch die Aktivierung durch einen Nutzer gestartet. Im Schritt 200 sendet der Client eine Anfrage (vorbestimmte URL-Adresse) an den Server, mit der der Start der Ferndiagnose angefordert wird. In Schritt 201 wird der Empfang einer Aktivierungsseite überprüft. Wird z.B. innerhalb einer festgesetzten Zeit eine Seite empfangen, folgt Schritt 202. Wird keine Anfrage empfangen, wird die Kommunikation erfolglos abgebrochen / beendet (Schritt 204). Im Schritt 202 sendet der Client eine Anfrage nach einer Login-Seite an den Server (URL-Adresse). Daraufhin wird in Schritt 205 der Empfang einer entsprechenden Seite überprüft. Wird z.B. innerhalb einer festgesetzten Zeit eine Seite empfangen, folgt Schritt 206. Wird keine Seite empfangen, wird die Kommunikation abgebrochen / beendet (Schritt 204). Im Schritt 206 sendet der Client eine Anfrage nach einem Login-Skript. Daraufhin wird in Schritt 207 der Empfang des Skripts überprüft. Wird z.B. innerhalb einer festgesetzten Zeit das Skript empfangen, folgt Schritt 208. Wird kein Skript empfangen, wird die Kommunikation abgebrochen / beendet (Schritt 204). In Schritt 208 werden die Nutzeridentifikationsdaten aus einem Speicher (Einsatz EFI-Schnittstelle) geholt und an den Server gesendet sowie eine Folgeseite angefragt. Daraufhin wird in Schritt 210 der Empfang einer Folgeseite samt Loginbestätigung und Skriptverweis überprüft. Wird z.B. innerhalb einer festgesetzten Zeit eine Folgeseite mit den entsprechenden Angaben empfangen, folgt Schritt 211. Wird keine Seite oder keine Bestätigung empfangen, wird die Kommunikation abgebrochen / beendet (Schritt 204). Im Schritt 211 wird eine Anfrage für ein Fahrzeugidentifikationsskript gesendet. Daraufhin wird in Schritt 212 der Empfang eines Skripts überprüft. Wird z.B. innerhalb einer festgesetzten Zeit eine Skript empfangen, folgt Schritt 213. Wird kein Skript empfangen, wird die Kommunikation erfolglos abgebrochen / beendet (Schritt 204). Im Schritt 213 werden die Fahrzeugidentifikationsdaten ermittelt (z.B. aus einem Speicher im Endgerät oder durch Anfrage bei den zu diagnostizierenden Steuergeräten / Komponenten (Einsatz EFI-Schnittstelle) und eine Anfrage nach einer Folgeseite samt Identifikationsdaten gesendet. Daraufhin wird in Schritt 214 der Empfang einer Diagnoseseite samt Verweis auf das Skript überprüft. Wird z.B. innerhalb einer festgesetzten Zeit eine Seite empfangen, folgt Schritt 215. Werden keine Daten empfangen, wird die Kommunikation erfolglos abgebrochen / beendet (Schritt 204). Im Schritt 215 erfolgt die Anfrage nach einem Diagnoseskript. Daraufhin wird in Schritt 216 der Empfang eines Diagnoseskripts überprüft. Wird z.B. innerhalb einer festgesetzten Zeit eine Anfrage empfangen, folgt Schritt 217. Wird kein WML-Skript empfangen, wird die Kommunikation abgebrochen /beendet (Schritt 204). Im Schritt 217 werden durch entsprechende Kommunikation mit den zu diagnostizierenden Steuergeräten die Diagnosedaten ermittelt (Einsatz EFI-Schnittstelle) und mit einer Anfrage nach einer Folgeseite gesendet. Daraufhin wird in Schritt 218 der Empfang einer Ergebnisseite überprüft. Wird z.B. innerhalb einer festgesetzten Zeit eine Anfrage samt Daten empfangen, folgt Schritt 219. Wird keine Antwortseite empfangen, wird die Kommunikation erfolglos abgebrochen / beendet (Schritt 204). Im Schritt 219 wird auf der Basis des Ergebnisses ermittelt, ob einer Empfehlungsseite angefordert werden soll. Wenn nein, wird der Vorgang beendet (Schritt 204), wenn ja erfolgt das Senden einer entsprechenden Anfrage (Schritt 220). Daraufhin wird in Schritt 222 der Empfang einer Empfehlungsseite überprüft. Wird z.B. innerhalb einer festgesetzten Zeit eine Seite empfangen, folgt Schritt 223. Wird keine Seite empfangen, wird die Kommunikation abgebrochen / beendet (Schritt 204). Im Schritt 223 wird die Empfehlungsseite angezeigt und die Kommunikation und damit den Ferndiagnosevorgang gemäß Schritt 204 beendet.

Zwischendurch erfolgt gewöhnlich auch die Anzeige der erhaltenen Seiten (enthält vom Server generierte Status-Infos).

## Patentansprüche

1. Verfahren zur Übertragung von Informationen in Verbindung mit einem Fahrzeug, wobei fahrzeugseitig ein Client (10), netzwerkseitig ein Server (18) vorgesehen ist, wobei zwischen Server (18) und Client (10) und/oder umgekehrt eine Kommunikation über ein Mobilfunknetz (16) erfolgt, wobei die Informationen zur Realisierung einer fahrzeugbezogenen Ferndiagnose dient und die Kommunikation auf der Basis einer standardisierten, an die Gegebenheiten des Mobilfunknetzes (16) angepassten Protokolls erfolgt, wobei der Client (10) Anfragen an den Server (18) sendet, Informationen und Diagnosekommandos vom Server abruft und diese empfängt, wobei die Informationen und Diagnosekommandos fahrzeugindividuelle Daten und Befehle enthalten, **dadurch gekennzeichnet, dass** die Informationen Skripte sind, die als WML-Skripte übermittelt werden und die zur Ausführung bestimmter Aktionen im fahrzeugseitigem Client dienen, und dass zur Ferndiagnose die Skripte das ggf. fahrzeugspezifische Diagnoseprotokoll enthalten.

2. Verfahren nach Ansprüch1, **dadurch gekennzeichnet, dass** die gesendeten Anfragen auf der Verwendung von URL-Adressen basieren.

3. Verfahren nach einem der vorhergehenden Ansprüche, **dadurch gekennzeichnet, dass** die Informationen WAP-Seiten sind, die als WML-Seite übermittelt werden und die Verweise auf Skripte und/oder weitere, evtl. dynamisch generierte Daten enthalten.

4. Verfahren nach einem der vorhergehenden Ansprüche, **dadurch gekennzeichnet, dass** die die Kommunikation mit wenigstens einer eigenständigen, externen Applikation, die im mobilen Client implementiert ist, über ein standardisiertes Funktions-Interface zwischen dem Mobilfunkkommunikationsteil und der Applikation, die EFI-Schnittstelle, erfolgt.

5. Vorrichtung zum Senden und/oder zum Empfangen von Informationen in Verbindung mit einem Fahrzeug, mit einem fahrzeugseitigen Client (10), der über ein Mobilfunknetz (16) mit einem Server (18) kommuniziert, wobei die übertragenen Informationen zur Realisierung einer fahrzeugbezogenen Ferndiagnose dienen und der Client (10) Mittel umfasst, welche die Kommunikation auf der Basis eines standardisierten, an die Gegebenheiten des Mobilfunknetzes angepassten Protokolls durchführen, wobei der Client (10) Module umfasst, die Anfragen an den Server (18) senden, von dort Informationen und Diagnosekommandos abrufen und empfangen, wobei die Informationen und Diagnosekommandos fahrzeugindividuelle Daten und Befehle enthalten, **dadurch gekennzeichnet, dass** die Informationen Skripte sind, die als WML-Skripte übermittelt werden und die zur Ausführung bestimmter Aktionen im fahrzeugseitigem Client dienen, und dass zur Ferndiagnose die Skripte das ggf. fahrzeugspezifische Diagnoseprotokoll enthalten.

6. Vorrichtung nach Anspruch 5, **dadurch gekennzeichnet, dass** im Client wenigstens eine eigenständige, externe Applikation implementiert ist und ein standardisiertes Funktions-Interface zwischen dem Mobilfunkkommunikationsteil und der Applikation, die EFI-Schnittstelle, vorhanden ist, über die mit der Applikation kommuniziert wird.

7. Computerprogramm mit Programmcode-Mitteln, um alle Schritte von jedem beliebigen der Ansprüche 1 bis 4 durchzuführen, wenn das Programm auf einem Computer ausgeführt wird.

8. Computerprogrammprodukt mit Programmcodemitteln, die auf einem computerlesbaren Datenträger gespeichert sind, um das Verfahren nach jedem beliebigen der Ansprüche 1 bis 4 durchzuführen, wenn das Programmprodukt auf einem Computer ausgeführt wird

## Claims

1. Method for transmitting information relating to a vehicle, wherein is provided a client (10) at the vehicle end, a server (18) at the network end, wherein a communication takes place via a mobile radio network (16) between server (18) and client (10) and/or conversely, wherein the information is used for implementing a vehicle-related remote diagnosis and the communication takes place on the basis of a standardized protocol adapted to the situations of the mobile radio network (16), wherein the client (10) sends requests to the server (18), calls up information and diagnostic commands from the server and receives these, wherein the information and diagnostic commands contain vehicle-individual data and instructions, **characterized in that** the information is scripts which are conveyed as WML scripts and which are used for executing certain actions in the client at the vehicle end, and **in that**, for the purpose of remote diagnosis, the scripts contain the possibly vehicle-specific diagnostic protocol.

2. Method according to Claim 1, **characterized in that** the emitted requests are based on the use of URL addresses.

3. Method according to one of the preceding claims, **characterized in that** the information is WAP pages which are conveyed as WML page and which contain references to scripts and/or other, possibly dynamically generated data.

4. Method according to one of the preceding claims, **characterized in that** the communication with at least one independent, external application which is implemented in the mobile client, takes place via a standardized function interface between the mobile radio communication part and the application, the EFI interface.

5. Device for emitting and/or receiving information relating to a vehicle, comprising a client (10) at the vehicle end which communicates with a server (18) via a mobile radio network (16), wherein the transmitted information is used for implementing a vehicle-related remote diagnosis and the client (10) comprises means which perform the communication on the basis of a standardized protocol adapted to the situations of the mobile radio network, wherein the client (10) comprises modules which emit requests to the server (18), call up and receive information and diagnostic commands from there, wherein the information and diagnostic commands contain vehicle-individual data and instructions, **characterized in that** the information is scripts which are conveyed as WML scripts and which are used for executing certain actions in the client at the vehicle end, and **in that**, for the purpose of remote diagnosis, the scripts contain the possibly vehicle-specific diagnostic protocol.

6. Device according to Claim 5, **characterized in that** at least one independent external application is implemented in the client and a standardized function interface is present between the mobile radio communication part and the application, the EFI interface, via which communication takes place with the application.

7. Computer program comprising program code means in order to perform all the steps of any one of Claims 1 to 4 when the program is executed on a computer.

8. Computer program product comprising program code means which are stored on a computer-readable data medium in order to perform the method according to any one of Claims 1 to 4 when the program product is executed on a computer.

## Revendications

1. Procédé de transmission d'informations en liaison avec un véhicule, un client (10) étant prévu du côté du véhicule et un serveur (18) du côté du réseau, une communication par le biais d'un réseau de radiocommunication mobile (16) ayant lieu entre le serveur (18) et le client (10) et/ou inversement, les informations servant à réaliser un télédiagnostic en rapport avec le véhicule et la communication étant effectuée en se basant sur un protocole normalisé adapté aux conditions du réseau de radiocommunication mobile (16), le client (10) envoyant des demandes au serveur (18), invoquant des informations et des instructions de diagnostic auprès du serveur et recevant celles-ci, les informations et les instructions de diagnostic contenant des données et des instructions spécifiques au véhicule, **caractérisé en ce que** les informations sont des scripts qui sont communiqués sous la forme de scripts WML et qui servent à l'exécution de certaines actions dans le client du côté du véhicule et **en ce que** les scripts contiennent le protocole de diagnostic éventuellement spécifique au véhicule en vue du télédiagnostic.

2. Procédé selon la revendication 1, **caractérisé en ce que** les demandes envoyées se basent sur l'utilisation d'adresses URL.

3. Procédé selon l'une des revendications précédentes, **caractérisé en ce que** les informations sont des pages WAP qui sont communiquées sous la forme de pages WML et qui contiennent des renvois à des scripts et/ou d'autres données, éventuellement générées de manière dynamique.

4. Procédé selon l'une des revendications précédentes, **caractérisé en ce que** la communication avec au moins une application externe autonome, laquelle est mise en oeuvre dans le client mobile, s'effectue par le biais d'une interface de fonction normalisée entre la partie de radiocommunication mobile et l'application, l'interface EFI.

5. Dispositif pour envoyer et/ou recevoir des informations en liaison avec un véhicule, comprenant un client (10) du côté du véhicule qui communique avec un serveur (18) par le biais d'un réseau de radiocommunication mobile (16), les informations transmises servant à réaliser un télédiagnostic en rapport avec le véhicule et le client (10) comprenant des moyens qui effectuent la communication en se basant sur un protocole normalisé adapté aux conditions du réseau de radiocommunication mobile, le client (10) comprenant des modules qui envoient des demandes au serveur (18), y invoquent des informations et des instructions de diagnostic et les reçoivent de sa part, les informations et les instructions de diagnostic contenant des données et des instructions spécifiques au véhicule, **caractérisé en ce que** les informations sont des scripts qui sont communiqués sous la forme de scripts WML et qui servent à l'exécution de certaines actions dans le client du côté du véhicule et **en ce que** les scripts contiennent le protocole de diagnostic éventuellement spécifique au véhicule en vue du télédiagnostic.

6. Dispositif selon la revendication 5, **caractérisé en ce qu'**au moins une application externe autonome est mise en oeuvre dans le client et il existe entre la partie de radiocommunication mobile et l'application une interface de fonction normalisée, l'interface EFI, par le biais de laquelle a lieu la communication avec l'application.

7. Programme informatique comprenant des moyens de code de programme pour exécuter toutes les étapes de n'importe laquelle des revendications 1 à 4 lorsque le programme est exécuté sur un ordinateur.

8. Produit de programme informatique comprenant des moyens de code de programme qui sont enregistrés sur un support de données lisible par ordinateur pour mettre en oeuvre le procédé selon n'importe laquelle des revendications 1 à 4 lorsque le produit de programme est exécuté sur un ordinateur.
